Europäisches Patentamt

European Patent Office

Office européen des brevets

(11) Veröffentlichungsnummer: **0 262 461 B1**

(12) **EUROPÄISCHE PATENTSCHRIFT**

(19)

(45) Veröffentlichungstag der Patentschrift: **15.12.93**

(21) Anmeldenummer: **87112982.1**

(22) Anmeldetag: **04.09.87**

(51) Int. Cl.⁵: **G01F 1/66**

(54) Ultraschall-Strömungsgeschwindigkeitsmesser nach dem Phasendifferenz-Verfahren.

(30) Priorität: **30.09.86 DE 3633228**

(43) Veröffentlichungstag der Anmeldung:
**06.04.88 Patentblatt 88/14**

(45) Bekanntmachung des Hinweises auf die
Patenterteilung:
**15.12.93 Patentblatt 93/50**

(84) Benannte Vertragsstaaten:
**DE ES FR GB IT SE**

(56) Entgegenhaltungen:
**DE-A- 2 724 661**

(73) Patentinhaber: **SIEMENS AKTIENGESELL-
SCHAFT
Wittelsbacherplatz 2
D-80333 München(DE)**

(72) Erfinder: **Magori, Valentin, Dipl.-Phys.
Limburgstrasse 17
D-8000 München 90(DE)**

**Beschreibung**

Es sind bereits ein Verfahren und eine Anordnung zur Messung von Strömungsgeschwindigkeiten mit Ultraschall unter Ausnutzung der Phasendifferenz je eines stromauf und eines stromab gelaufenen Ultraschallsignals gleicher Lauflänge vorgeschlagen worden. Dabei konnte in vorteilhafter Weise auf billige Zwischenfrequenz-Verstärker-ICs für Rundfunkgeräte zurückgegriffen werden.

Nachteilig bei einem derartigen Verfahren und einer derartigen Anordnung ist, daß

a) drei Ultraschallwandler aufgewendet werden müssen,

b) die Stromauf- und die Stromab-Meßstrecke nicht identisch sind und

c) der Phasennullpunkt bei den verwendeten ICs in der Regel nicht spezifiziert ist und daher individuell abgeglichen werden muß. Dabei ist nicht gewährleistet, daß dieser Abgleich bei Temperaturänderungen sowie aufgrund von Alterungseffekten erhalten bleibt.

Die Nachteile a) und b) werden nach dem Stand der Technik, vergl. z. B. DE-OS 27 24 661, dadurch umgangen, daß getakteter Schall, nämlich sog. "Schallbursts", gleicher Schallfrequenz gleichzeitig von beiden Wandlern ausgesendet wird. Die beiden "Schallbursts" durchlaufen die Meßstrecke in entgegengesetzten Richtungen, treffen nahezu gleichzeitig auf den jeweils anderen Schallwandler auf und werden in elektrische Signale zurückverwandelt. Die zeitliche Länge $t_B$ der Schallbursts ist so bemessen, daß die Schallwandler beim Eintreffen der Empfangssignale nicht mehr senden:

$$t_B \leq \frac{L}{c} \, ,$$

wobei L die Länge der Meßstrecke und c die Schallgeschwindigkeit bedeuten.

Die Phasendifferenz $\Delta\phi$ der beiden in unterschiedlicher Richtung gelaufenen Signale ist ein Maß für die Strömungsgeschwindigkeit v:

$$\Delta\varphi = \frac{4\pi f L v}{c^2}$$

Der vorliegende Erfindung liegt die Aufgabe zugrunde, einen Ultraschall-Strömungsgeschwindigkeitsmesser der eingangs genannten Art zu schaffen, der den zuvor erläuterten Nachteil "c)" auf einfache und zuverlässige Art und Weise beseitigt.

Zur Lösung der Aufgabe für die vorliegende Erfindung wird ein Ultraschall-Strömungsgeschwindigkeitsmesser der eingangs genannten Art und gemäß dem Oberbegriff des Patentanspruchs 1 vorgeschlagen, der durch die in dem kennzeichnenden Teil des Patentanspruchs 1 angegebenen Merkmale charakterisiert ist.

Vorteilhafte Weiterbildungen der Erfindung sind durch die in den Unteransprüchen angegebenen Merkmal gekennzeichnet.

Im folgenden wird die vorliegende Erfindung anhand mehrerer Figuren im einzelnen beschrieben, wobei die Figuren lediglich ein bevorzugtes Ausführungsbeispiel für die Erfindung betreffen.

Fig. 1    zeigt eine Diagrammdarstellung des zeitlichen Verlaufs der Vorgänge während eines Meßvorgangs.

Fig. 2    zeigt eine Prinzipschaltung für eine bevorzugte Realisierungsform der erfindungsgemäßen Anordnung.

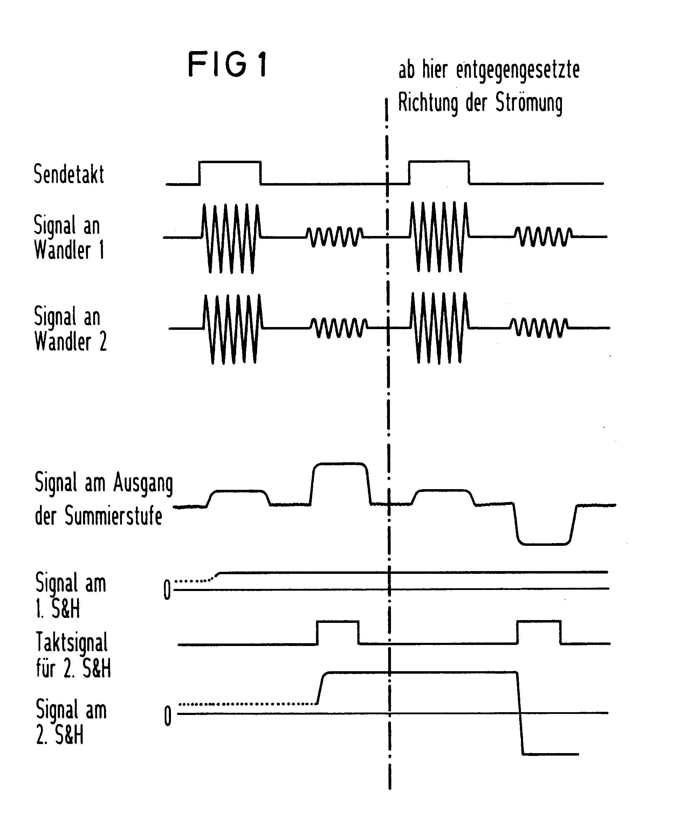

Gemäß dem Erfindungsgedanken sind die beiden Empfangsverstärker ständig mit den Ultraschall-Wandlern verbunden. Auch während des Sendens wird die Phasenlage zwischen den an den Schallwandlern anliegenden Signalen ausgewertet und diese Phasendifferenz als Referenz verwendet, auf welche die Phasendifferenz während des Empfangens bezogen wird (Fig. 1).

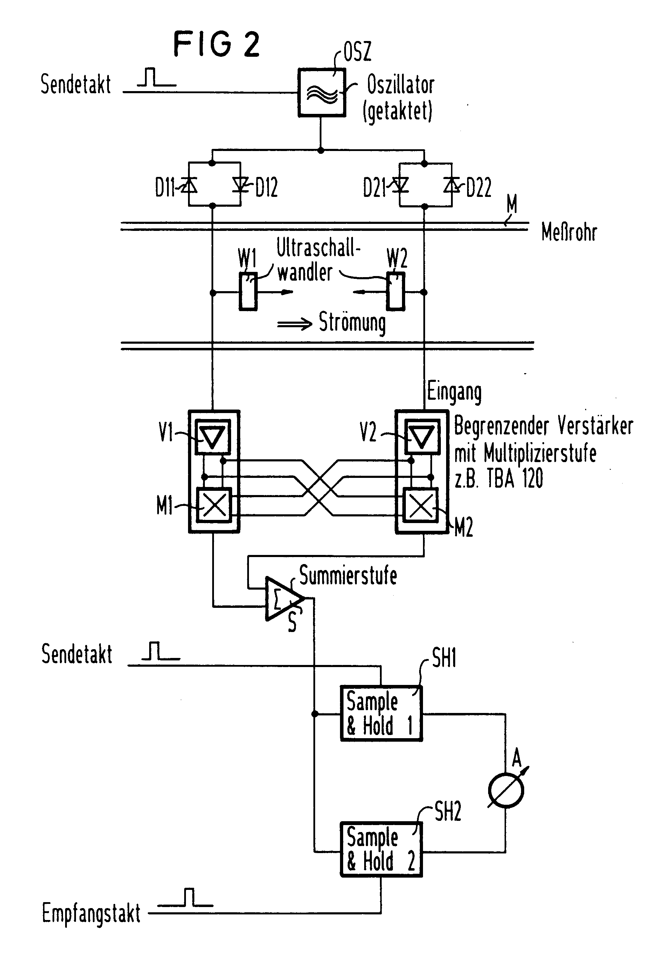

Die schaltungstechnische Verwirklichung des Erfindungsgedankens ist in Fig. 2 dargestellt:
Wie in Fig. 2 gezeigt, ist jeder der Empfangsverstärker V1, V2 fest mit dem ihm zugeordneten Ultraschallwandler W1, W2 verbunden. Die zwischen den an den Ultraschallwandlern W1 u. W2 liegenden Signale werden auch während des Sendens von Ultraschallsignalen ausgewertet, und die festgestellte Phasendifferenz wird als Referenzgröße verwendet, auf die die Phasendifferenz während des Empfangens bezogen wird (vergl. Fig. 1).

Im einzelnen ist Fig. 2 zu entnehmen, daß für jeden der Ultraschallwandler W1, W2 ein als Sende/Empfangs-Umschalter fungierendes antiparalleles Diodenpaar D11/D12, D21/D22 vorgesehen ist, über welche Diodenpaare die Ultraschallwandler W1, W2 mit einem ihrer elektrischen Anschlüsse fest an den Ausgang des Oszillators OSZ angeschlossen sind, wobei diese elektrischen Anschlüsse der Ultraschallwandler W1, W2 jeweils unmittelbar mit dem Eingang des zugeordneten Empfangsverstärkers V1, V2 verbunden sind, daß die Ausgänge der Empfangsverstärker V1, V2 jeweils mit ersten Eingängen eines zugeordneten multiplikativen Mischers M1 bzw. M2 und mit zweiten Eingängen des jeweils dem anderen Empfangsverstärker zugeordneten multiplikativen Mischers M2 bzw. M1 verbunden sind, daß die Ausgänge der multiplikativen Mischer M1, M2 jeweils mit einem Eingang einer Summierstufe S verbunden sind, daß der Ausgang der Summierstufe S mit dem Eingang eines ersten Abtast- und Halte (Sample-and-Hold) - Glieds SH1 und dem Ausgang eines zweiten Abtast- und Halteglieds SH2 verbunden ist, daß die Ausgänge des ersten und des zweiten Abtast-und-

Halte-Glieds SH1, SH2 an individuelle Eingänge einer Auswerteeinrichtung A angeschlossen sind, daß ein Aktivierungseingang des ersten Abtast-und-Halte-Glieds SH1 mit einem Sendetakt und ein Aktivierungseingang des zweiten Abtast-und-Halte-Glieds SH2 mit einem Empfangstakt beaufschlagt werden und daß die jeweils zweiten elektrischen Anschlüsse der Ultraschallwandler W1, W2 auf ein gemeinsames Betriebspotential gelegt sind.

Die Ausgangssignale der Abtast-und-Halte-Glieder SH1, SH2 werden vorzugsweise zur Bildung eines digitalen Phasendifferenzsignals einer digitalen Subtraktion unterzogen (nicht gezeigt). Eine andere Möglichkeit besteht darin, daß die Ausgangssignale der Abtast-und-Halte-Glieder SH1, SH2 zur Bildung eines digitalen Phasendifferenzsignals einem Vorwärts/Rückwärts-Zähler zugeführt werden, dessen Zählstand die jeweils auftretende Phasendifferenz repräsentiert (nicht gezeigt).

Zusammenfassend ist festzustellen, daß die beiden Wandler über je ein als Sende-Empfangs-Umschalter wirkendes antiparalleles Diodenpaar mit dem Sender verbunden sind. Die Ausgänge der beiden Empfangsverstärker sind, wie bereits beschrieben, überkreuz mit den Eingängen der multiplikativen Mischer verbunden, so daß eine Phasendifferenz der Signale eine komplementäre Veränderung beider Ausgangsspannungen bewirkt. Die Summe der Ausgangsspannungen beider Mischer wird während des Sendens mit einem ersten Abtast-und-Halte (Sample-and-Hold) - Glied, während des Empfangs mit einem zweiten Abtast-und-Halte - Glied abgespeichert. Die Differenz der beiden abgespeicherten Werte verkörpert die Strömungsgeschwindigkeit.

Eine direkte Auswertung der Wechselspannung, die sich am Ausgang der Phasenmodulatoren ergibt, könnte ebenfalls ein mögliches Auswerteverfahren darstellen. Dies könnte mit sehr geringem Aufwand durch synchrone Gleichrichtung der Wechselspannung am Ausgang der Summierschaltung ähnlich einem bereits früher vorgeschlagenen Verfahren erfolgen. Hierdurch wäre eine hohe Fremdsignalunterdrückung gegeben, und die beiden Abtast-und-Halte-Glieder könnten entfallen.

**Patentansprüche**

1. Ultraschall-Strömungsgeschwindigkeitsmesser nach dem Phasendifferenz-Verfahren, mit einer durch zwei sich in der Strömungsachse gegenüberstehenden Ultraschallwandler innerhalb eines Meßrohres gebildeten Strömungsmeßstrecke, welche Schallwandler getaktet durch einen Oszillator erregt werden, und mit den Ultraschallwandlern individuell zugeordneten Empfangsverstärkern und diesen nachgeordneten Auswerteeinrichtungen, wobei während des Empfangs von Ultraschallsignalen die Phasenlage der an den Ausgängen der Empfangsverstärker auftretenden Signale ausgewertet wird, dadurch **gekennzeichnet ,** daß jeder der Empfangsverstärker (V1, V2) dauerhaft mit dem ihm zugeordneten Ultraschallwandler (W1, W2) verbunden ist, daß die Ausgänge der Empfangsverstärker (V1, V2) jeweils mit ersten Eingängen eines zugeordneten multiplikativen Mischers (M1 bzw. M2) und mit zweiten Eingängen des jeweils dem anderen Empfangsverstärker zugeordneten multiplikativen Mischers (M2 bzw. M1) verbunden sind, daß die Ausgänge der multiplikativen Mischer (M1, M2 jeweils mit einem Eingang einer Summierstufe (S) verbunden sind und daß der Ausgang der Summierstufe (S) mit einem Mittel zur Auswertung der Wechselspannung, die sich am Ausgang der Summierstufe (S) ergibt, verbunden ist.

2. Ultraschall-Strömungsgeschwindigkeitsmesser nach Anspruch 1, dadurch **gekennzeichnet ,** daß für jeden der Ultraschallwandler (W1, W2) ein als Sende/Empfangs-Umschalter fungierendes antiparalleles Diodenpaar (D11,/D12, D21/D22) vorgesehen ist, über welche Diodenpaare die Ultraschallwandler (W1, W2) mit einem ihrer elektrischen Anschlüsse dauerhaft an den Ausgang des Oszillators (OSZ) angeschlossen sind, wobei diese elektrischen Anschlüsse der Ultraschallwandler (W1, W2) jeweils unmittelbar mit dem Eingang des zugeordneten Empfangsverstärkers (V1, V2) verbunden sind, daß der Ausgang der Summierstufe (S) mit dem Eingang eines ersten Abtast- und Halte (Sample- and Hold)-Glieds (SH1) und dem Ausgang eines zweiten Abtast- und Halteglieds (SH2) verbunden ist, daß die Ausgänge des ersten und des zweiten Abtast- und Halte-Glieds (SH1, SH2) an individuelle Eingänge einer Auswerteeinrichtung (A) angeschlossen sind, daß ein Aktivierungseingang des ersten Abtast- und Halte-Glieds (SH1) mit einem Sendetakt und ein Aktivierungseingang des zweiten Abtast- und Halte-Glieds (SH2) mit einem Empfangstakt beaufschlagt werden und daß die jeweils zweiten elektrischen Anschlüsse der Ultraschallwandler (W1, W2) auf ein gemeinsames Betriebspotential gelegt sind.

3. Ultraschall-Strömungsgeschwindigkeitsmesser nach Anspruch 2, dadurch **gekennzeichnet ,** daß die Ausgangssignale der Abtast- und Halte-Glieder (SH1, SH2) zur Bildung eines digitalen Phasendifferenzsignals einer digitalen Subtraktion unterzogen werden.

**4.** Ultraschall-Strömungsgeschwindigkeitsmesser nach Anspruch 2, dadurch **gekennzeichnet ,** daß die Ausgangssignale der Abtast- und Halte-Glieder (SH1, SH2) zur Bildung eines digitalen Phasendifferenzsignales einem Vorwärts/Rückwärts-Zähler zugeführt werden, dessen Zählstand die jeweils auftretende Phasendifferenz repräsentiert.

## Claims

**1.** Ultrasonic flow rate meter in accordance with the phase difference method, comprising a flow measuring section formed by two ultrasonic transducers, which are opposite to one another along the axis of flow, within a measuring tube, which sound transducers are excited in a pulsed manner by an oscillator, and with receiving amplifiers individually allocated to the ultrasonic transducers, and evaluating devices following these amplifiers, in which arrangement the phase angle of the signals occurring at the outputs of the receiving amplifiers is evaluated during the reception of ultrasonic signals, characterized in that each of the receiving amplifiers (V1, V2) is permanently connected to its associated ultrasonic transducer (W1, W2), in that the outputs of the receiving amplifiers (V1, V2) are in each case connected to first inputs of an associated multiplying mixer (M1 and, respectively, M2) and to two second inputs of the multiplying mixer (M2 and, respectively, M1) in each case associated with the other receiving amplifier, in that the outputs of the multiplying mixers (M1, M2) are in each case connected to one input of a summing stage (S), and in that the output of the summing stage (S) is connected to a means for evaluating the alternating voltage which is obtained at the output of the summing stage (S).

**2.** Ultrasonic flow rate meter according to Claim 1, characterized in that an antiparallel pair of diodes (D11/D12, D21/D22) acting as transmitting/receiving switch is provided for each of the ultrasonic transducers (W1, W2), via which pairs of diodes the ultrasonic transducers (W1, W2) are permanently connected with one of their electrical terminals to the output of the oscillator (OSZ), these electrical terminals of the ultrasonic transducers (W1, W2) in each case being directly connected to the input of the associated receiving amplifier (V1, V2), in that the output of the summing stage (S) is connected to the input of a first sample and hold section (SH1) and to the output of a second sample and hold section (SH2), and in that the outputs of the first and the second sample and hold section (SH1, SH2) are connected to individual inputs of an evaluating device (A), in that a transmit clock is applied to an enable input of the first sample and hold section (SH1) and a receive clock is applied to an enable input of the second sample and hold section (SH2), and in that the in each case second electrical terminals of the ultrasonic transducers (W1, W2) are connected to a common operating potential.

**3.** Ultrasonic flow rate meter according to Claim 2, characterized in that the output signals of the sample and hold sections (SH1, SH2) are subjected to a digital subtraction for forming a digital phase difference signal.

**4.** Ultrasonic flow rate meter according to Claim 2, characterized in that, for forming a digital phase difference signal, the output signals of the sample and hold sections (SH1, SH2) are supplied to an up/down counter, the count of which represents the phase difference occurring in each case.

## Revendications

**1.** Appareil de mesure de vitesses d'écoulement à ultrasons, basé sur le principe de la différence de phase, comportant une section de mesure d'écoulement formée par deux transducteurs à ultrasons, disposés en vis-à-vis sur l'axe d'écoulement, à l'intérieur d'un tube de mesure, lesquels transducteurs à ultrasons sont excités de façon cadencée par un oscillateur, et des amplificateurs de réception associés individuellement aux transducteurs à ultrasons, et des dispositifs d'évaluation branchés en aval de ces amplificateurs, la position de phase des signaux, qui apparaissent aux sorties des amplificateurs de réception, étant évaluée pendant la réception de signaux ultrasonores, caractérisé par le fait que chacun des amplificateurs de réception (V1,V2) est relié en permanence au transducteur à ultrasons (W1,W2) qui lui est associé, que les sorties des amplificateurs de réception (V1,V2) sont reliées respectivement à des premières entrées d'un mélangeur multiplicatif associé (M1 ou M2) et à des secondes entrées du mélangeur multiplicatif (M2 ou M1), associé respectivement à l'autre amplificateur de réception, que les sorties des mélangeurs multiplicatifs (M1, M2) sont reliées respectivement à une entrée d'un étage additionneur (S), et que la sortie de l'étage additionneur (S) est reliée à des moyens servant à évaluer la tension alternative, qui apparaît à la sortie de l'étage additionneur (S).

2. Appareil de mesure de vitesse d'écoulement à ultrasons suivant la revendication 1, caractérisé par le fait que pour chacun des transducteurs à ultrasons (W1,W2), il est prévu un couple de diodes antiparallèles (D11/D12, D21/D22), qui fonctionne en tant que commutateur d'émission/réception, les transducteurs à ultrasons (W1,W2) étant reliés en permanence, par une de leurs bornes électriques, par l'intermédiaire des couples de diodes, à la sortie de l'oscillateur (OSZ), ces bornes électriques des transducteurs à ultrasons (W1,W2) étant reliées respectivement directement à l'entrée de l'amplificateur de réception associé (V1,V2), que la sortie de l'étage additionneur (S) est reliée à l'entrée d'un premier circuit d'échantillonnage et de blocage (Sample- and Hold) (SH1) et à la sortie d'un second circuit d'échantillonnage et de blocage (SH2), que les sorties des premier et second circuits d'échantillonnage et de blocage (SH1,SH2) sont reliées à des entrées individuelles d'un dispositif d'évaluation (A), qu'une entrée d'activation du premier circuit d'échantillonnage et de blocage (SH1) est chargée par une horloge d'émission et qu'une entrée d'activation du second circuit d'échantillonnage et de blocage (SH2) est chargée par une horloge de réception, et que les secondes bornes électriques respectives des transducteurs à ultrasons (W1,W2) sont placées à un potentiel de service commun.

3. Appareil de mesure de vitesse d'écoulement à ultrasons suivant la revendication 1, caractérisé par le fait que les signaux de sortie des circuits d'échantillonnage et de blocage (SH1,SH2) sont soumis à une soustraction numérique pour la formation d'un signal numérique de différence de phase.

4. Appareil de mesure de vitesse d'écoulement à ultrasons suivant la revendication 2, caractérisé par le fait que les signaux de sortie des circuits d'échantillonnage et de blocage (SH1, SH2) sont envoyés, pour la formation d'un signal numérique de différence de phase, à un compteur progressif/régressif, dont l'état de comptage représente la différence de phase qui apparaît respectivement.

FIG 1

ab hier entgegengesetzte
Richtung der Strömung

Sendetakt

Signal an
Wandler 1

Signal an
Wandler 2

Signal am Ausgang
der Summierstufe

Signal am
1. S&H

Taktsignal
für 2. S&H

Signal am
2. S&H

# FIG 2

Sendetakt ⎍

OSZ
Oszillator
(getaktet)

D11 D12    D21 D22

M
Meßrohr

W1    Ultraschall-    W2
      wandler

⟹ Strömung

Eingang

V1    V2    Begrenzender Verstärker
             mit Multiplizierstufe
             z.B. TBA 120

M1    M2

Summierstufe

Σ
S

Sendetakt ⎍

SH1

Sample
& Hold  1

A

SH2

Sample
& Hold  2

Empfangstakt ⎍